# EUROPEAN PATENT APPLICATION

(11) **EP 3 072 387 A1**
(43) Date of publication of application: **28.09.2016**
(21) Application number: 15171764.2
(22) Date of filing: 12.06.2015
(51) Int. Cl.: A01G 9/24, A01G 31/02

(54) **PLANT CULTIVATION DEVICE**

(30) Priority: 26.03.2015 TW 104109680
(71) Applicant: Cal-Comp Biotech Co., Ltd., New Taipei City 222 (TW)
(72) Inventor: Kao, Po-Chou, 222 New Taipei City (TW)
(74) Representative: Vogel, Andreas

(57) **Abstract**

A plant cultivation device includes a case (100), a temperature control module (200), and a circulation fan (300). A cultivation room (101) is formed in the case (100). The temperature control module (200) includes a piezoelectric chip (210) and a heat exchange assembly (220). The heat exchange assembly (220) includes a heat conduction plate (221) and multiple fins (222) are formed on the heat conduction plate (221). One surface of the piezoelectric chip (210) is in the cultivation room (101) and attached on the heat conduction plate (221). The other surface of the piezoelectric chip (210) is outside of the cultivation room (101). The circulation fan (300) is attached on the heat exchange assembly (220). A horizontal component (D11) of an airflow direction (D1) of the circulation fan (300) is in the same direction as a horizontal component (D21) of a normal direction (D2) of each fin (222).

## Description

### BACKGROUND

### 1. Technical Field

The technical field relates to a plant cultivation device and, in particular, to a plant cultivation device which can automatically drain water.

### 2. Related Art

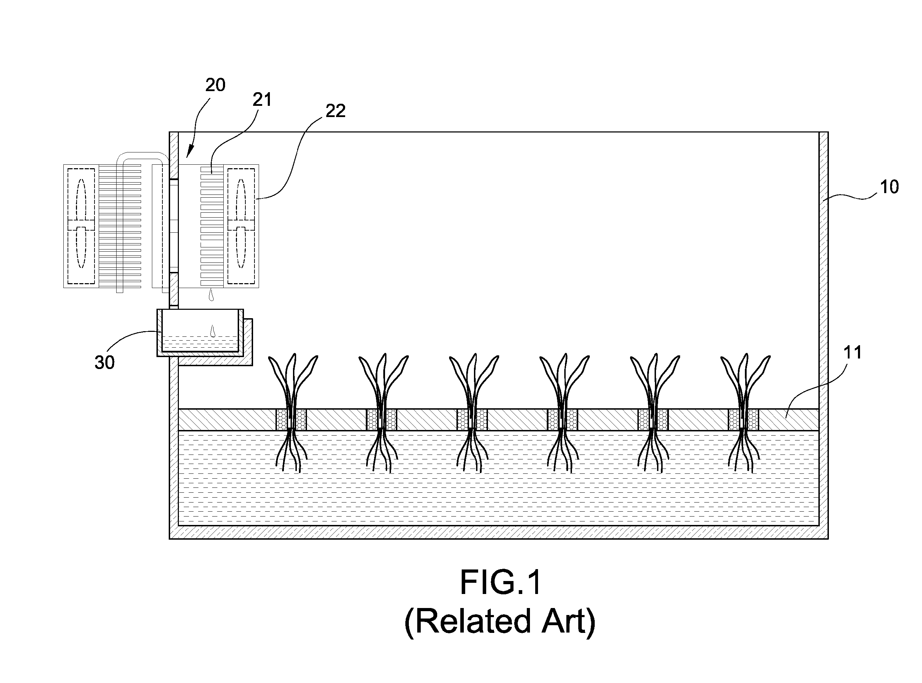

Referring to Fig. 1, according to conventional techniques in recent years, hydroponic vegetables are usually planted under constant temperature and humidity conditions. One conventional planting method is to plant seeds by putting a load tray 11 which holds the seeds in a plant cultivation device 10. A conventional plant cultivation device 10 generally utilizes a piezoelectric chip and a fin unit 20 attached thereon for performing a cooling process, and a circulation fan 22 is utilized to guide the air in the plant cultivation device 10 to flow by each fin 21 for cooling. Generally, the circulation fan 22 drives airflow to circulate horizontally, so the fins 21 are disposed horizontally in accordance with the airflow direction.

The piezoelectric chip operates to cool the fin set 20 attached to the piezoelectric chip. When the air in the plant cultivation device 10 contacts the relatively cooler fin set 20, water is condensed on a surface of the fin 21 from the air. The condensed water cannot flow out, and therefore accumulates on an upper surface of each fin 21. The condensed water cannot be blown away by the circulation fan 22, so the condensed water keeps accumulating until the fin 21 cannot hold the water anymore, and then the condensed water starts to drop to create a pool of water in the plant cultivation device 10. A conventional solution to this problem is placing a water tray 30 under the fin set 20 to hold water, and then removing the water by manpower on a regular time basis. Said solution is inconvenient, and the water stored in the water tray 30 may overflow to the plant cultivation device 10 due to inadvertently forgetting to remove the water.

In view of the foregoing, the inventor made various studies to overcome the above-mentioned problems to realize the improvements, on the basis of which the present disclosure is accomplished.

### BRIEF SUMMARY

The disclosure is directed to a plant cultivation device which can drain condensed water from a fin.

The present disclosure provides a plant cultivation device including a case, a temperature control module, and a circulation fan. A cultivation room is formed in the case. The temperature control module includes a piezoelectric chip and a heat exchange assembly. The heat exchange assembly includes a heat conduction plate, and a plurality of fins arranged side by side are formed on a surface of the heat conduction plate. Each of the fins is inclined with respect to the horizontal. A surface of the piezoelectric chip is in the cultivation room and attached on the other surface of the heat conduction plate. The other surface of the piezoelectric chip is outside of the cultivation room. A circulation fan is attached to the heat exchange assembly. A horizontal component of an airflow direction of the circulation fan is in the same direction as a horizontal component of a normal direction of an overall top surface of each fin.

It is preferable that a heat sink assembly includes a heat pipe and a heat sink fan, one end of the heat pipe is attached to the piezoelectric chip, a plurality of heat sink plates are disposed on the other end of the heat pipe, the heat sink fan is disposed corresponding to the heat sink plates, and the heat sink fan drives airflow to flow by the heat sink plates on the heat pipe.

Preferably, the heat conduction plate is inclined with respect to the horizontal, and each of the fins is perpendicular to the heat conduction plate. An airflow direction of the circulation fan can be perpendicular to a normal direction of an overall top surface of each fin, or the airflow direction of the circulation fan can be inclined with respect to the normal direction of the overall top surface of each fin.

It is preferable that the heat conduction plate is disposed vertically, and each of the fins is inclined with respect to the heat conduction plate. An airflow direction of the circulation fan can be perpendicular to a normal direction of an overall top surface of each fin, or the airflow direction of the circulation fan can be inclined with respect to the normal direction of the overall top surface of each fin.

Preferably, the circulation fan is attached to a horizontally lower end of the fins. The circulation fan can also be attached to a horizontally upper end of the fins.

In the plant cultivation device of the present disclosure, the heat exchange assembly includes the inclined fins, so the condensed water on the fin can be driven by gravity to flow out from the fin. Accordingly, there are no water accumulations that need to be removed by manpower.

### BRIEF DESCRIPTION OF THE DRAWINGS

Fig. 1 is a schematic view of a conventional technique.
Fig. 2 is a use state view of a plant cultivation device according to a first embodiment of the present disclosure.
Fig. 3 is a use state view of the plant cultivation device according to a second embodiment of the present disclosure.
Fig. 4 is a use state view of the plant cultivation device according to a third embodiment of the present disclosure.
Fig. 5 is a schematic view of a possible alternate design of a fin according to the present disclosure.
Fig. 6 is a schematic view of another possible alternate design of the fin according to the present disclosure.
Fig. 7 is a use state view of the plant cultivation device according to a fourth embodiment of the present disclosure.
Fig. 8 is a use state view of the plant cultivation device according to a fifth embodiment of the present disclosure.

### DETAILED DESCRIPTION

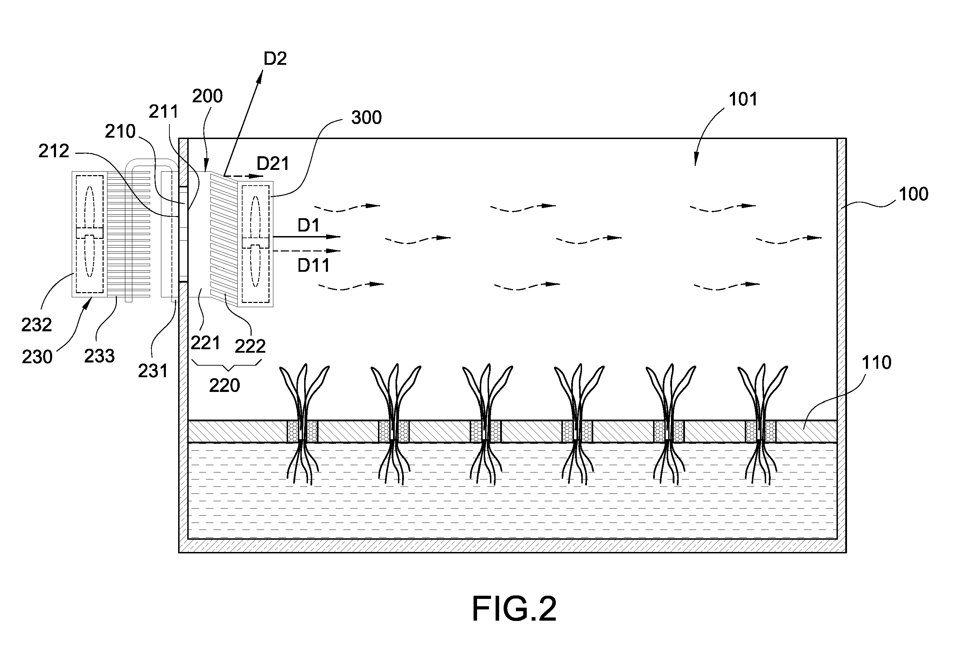

Referring to Fig. 2, a first embodiment of the present disclosure provides a plant cultivation device which comprises a case 100, a temperature control module 200, a heat sink assembly 230, and a circulation fan 300.

A cultivation room 101 is formed in the case 100. A load tray 110 is disposed at a bottom of the case 100 for cultivating plants.

A temperature control module 200 comprises at least one piezoelectric chip 210 (the number thereof is not limited by the present disclosure) and a heat exchange assembly 220. The piezoelectric chip 210 includes two surfaces which are a cool side 211 and a hot side 212, wherein one surface of the piezoelectric chip 210 is in the cultivation room 101, and the other surface is outside of the cultivation room 101. According to the present embodiment, the cool side 211 of the piezoelectric chip 210 is preferably disposed in the cultivation room 101, and the hot side 212 of the piezoelectric chip 210 is disposed outside of the cultivation room 101; however, the present disclosure is not limited thereto, the cool side 211 and the hot side 212 can be exchanged in positions.

The heat exchange assembly 220 includes a heat conduction plate 221. The heat conduction plate 221 is disposed vertically, and one surface of the heat conduction plate 221 is attached on the cool side 211 of the piezoelectric chip 210. A plurality of fins 222 are formed on the other surface of the heat conduction plate 221. Each of the fins 222 is inclined with respect to the heat conduction plate 221. According to the present embodiment, each of the fins 222 preferably extends from the heat conduction plate 221, and each of the fins 222 is inclined downwardly with respect to the horizontal.

A circulation fan 300 is attached to the heat exchange assembly 220, and preferably disposed at an end portion of the fins 222. A horizontal component D11 of an airflow direction D1 of the circulation fan 300 is in the same direction as a horizontal component D21 of a normal direction D2 of an overall top surface of each fin 222. An airflow direction D1 of the circulation fan 300 is inclined with respect to the normal direction D2 of the overall top surface of each fin 222. The circulation fan 300 is attached to a horizontally lower end of the fins 222.

The heat sink assembly 230 including a heat pipe 231 and a heat sink fan 232. One end of the heat pipe 231 is attached to the hot side 212 of the piezoelectric chip 210, a plurality of heat sink plates 233 are disposed on the other end of the heat pipe 231, the heat sink fan 232 is disposed corresponding to the heat sink plates 233, and the heat sink fan 232 drives airflow to flow by the heat sink plates 233 on the heat pipe 231.

During the operation of the piezoelectric chip 210, the heat at the cool side thereof is transferred to the hot side 212, thereby cooling the heat exchange assembly 220 attached on the cool side 211 of the piezoelectric chip 210. When the air in the cultivation room 101 contacts the relatively cooler heat exchange assembly 220, water is condensed on a surface of the fin 222 from the air. The condensed water is driven by gravity to flow downwardly along the fin 222, and is blown and scattered into the cultivation room by the circulation fan 300.

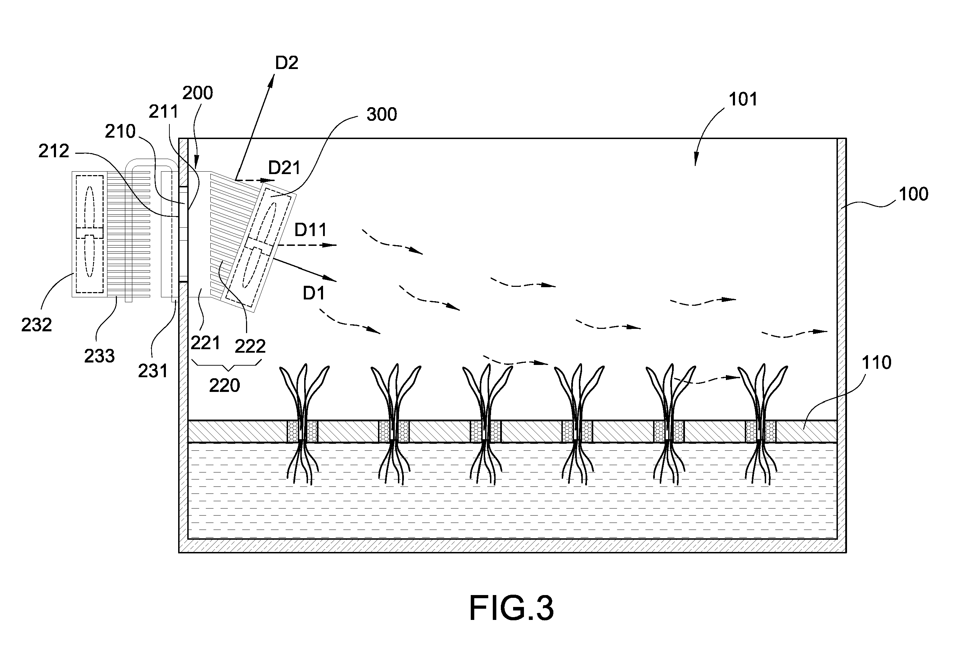

Referring to Fig. 3, a second embodiment of the present disclosure provides a plant cultivation device which comprises a case 100, a temperature control module 200, a heat sink assembly 230, and a circulation fan 300. The structure of the second embodiment is similar to the structure of the first embodiment, so the descriptions of the equivalent or the same components are not repeated. The difference in the present embodiment compared to the first embodiment is that an airflow direction D1 of the circulation fan 300 is perpendicular to a normal direction D2 of an overall top surface of each fin 222. A horizontal component D11 of the airflow direction D1 of the circulation fan 300 is in the same direction as a horizontal component D21 of the normal direction D2 of the overall top surface of each fin 222. When the piezoelectric chip 210 operates to cool the heat exchange assembly 220, the condensed water on the surface of the fin 222 is driven by gravity to flow down along the fin 222, and is blown and scattered into the cultivation room 101 by the circulation fan 300.

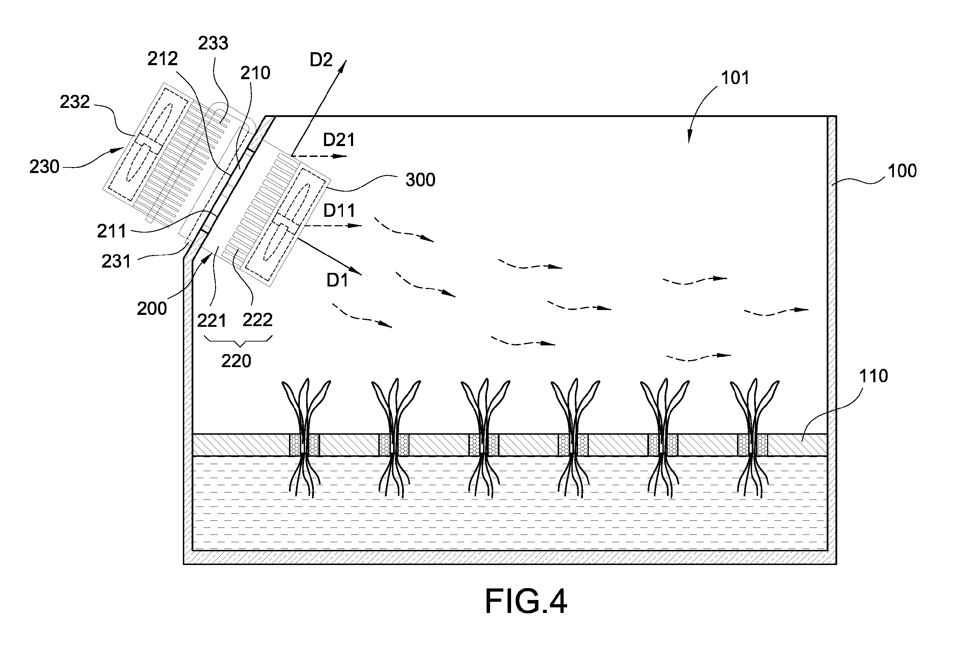

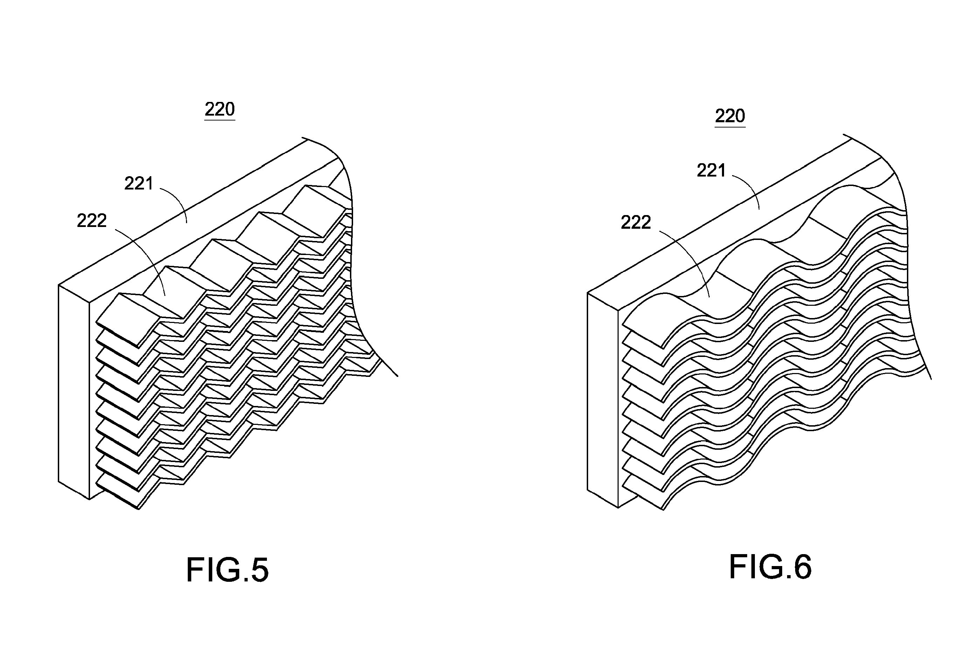

Referring to Fig. 4, a third embodiment of the present disclosure provides a plant cultivation device which comprises a case 100, a temperature control module 200, a heat sink assembly 230, and a circulation fan 300. The structure of the third embodiment is similar to the structure of the first embodiment, so the descriptions of the equivalent or the same components are omitted. The difference in the present embodiment compared with the first embodiment is that the heat conduction plate 221 is inclined with respect to the horizontal, and each of the fins 222 is perpendicular to the heat conduction plate 221. The circulation fan 300 is attached to a horizontally lower end of the fins 222. An airflow direction D1 of the circulation fan 300 is perpendicular to a normal direction D2 of an overall top surface of each fin 222. A horizontal component D11 of the airflow direction D1 of the circulation fan 300 is in the same direction as a horizontal component D21 of the normal direction D2 of the overall top surface of each fin 222. When the piezoelectric chip 210 operates to cool the heat exchange assembly 220, the condensed water on the surface of the fin 222 is driven by gravity to flow down along the fin 222, and is blown and scattered into the cultivation room 101 by the circulation fan 300. The present disclosure does not limit the design of the fin 222, and the fin 222 can be, for example, wave-shaped as shown in Fig. 5 or sawtooth-shaped as shown in Fig. 6.

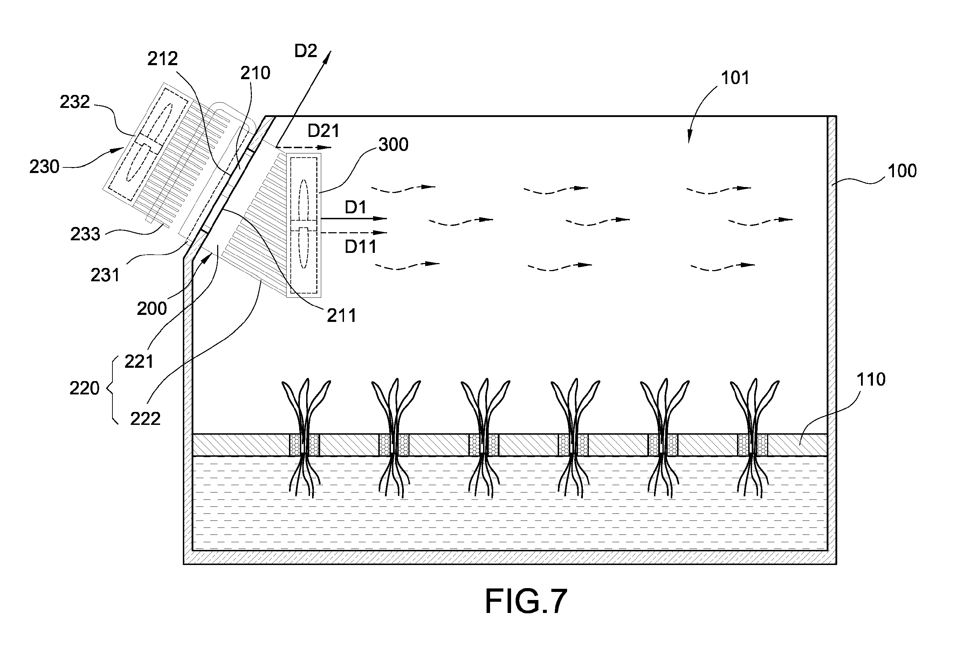

Referring to Fig. 7, a fourth embodiment of the present disclosure provides a plant cultivation device which comprises a case 100, a temperature control module 200, a heat sink assembly 230, and a circulation fan 300. The structure of the fourth embodiment is similar to the structure of the first embodiment, so the descriptions of the equivalent or the same components are omitted. The difference in the present embodiment compared with the first embodiment is that the heat conduction plate 221 is inclined with respect to the horizontal, and each of the fins 222 is perpendicular to the heat conduction plate 221. The circulation fan 300 is attached to a horizontally lower end of the fins 222. An airflow direction D1 of the circulation fan 300 is inclined with respect to a normal direction D2 of an overall top surface of each fin 222. A horizontal component D11 of the airflow direction D1 of the circulation fan 300 is in the same direction as a horizontal component D21 of the normal direction D2 of the overall top surface of each fin 222. When the piezoelectric chip 210 operates to cool the heat exchange assembly 220, the condensed water on the surface of the fin 222 is driven by gravity to flow down along the fin 222, and is blown and scattered into the cultivation room 101.

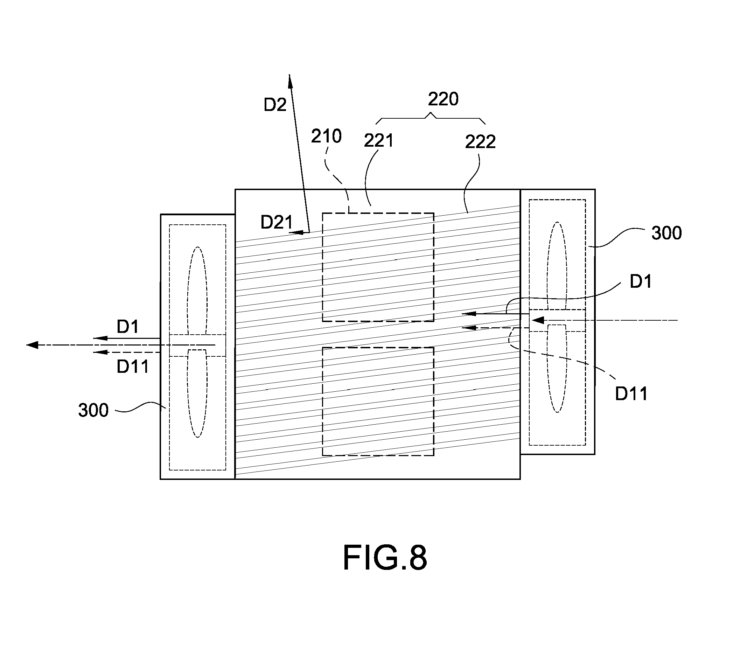

Referring to Fig.2 and 8, a fifth embodiment of the present disclosure provides a plant cultivation device which comprises a case 100, a temperature control module 200, a heat sink assembly 230, and at least one circulation fan 300. The structures of the case 100 and the heat sink assembly 230 of the fifth embodiment are the same as the above-mentioned embodiments (refer to Fig.2), so the descriptions thereof are omitted.

Referring to Fig 8, the temperature control module 200 in the present embodiment is different with the above-mentioned embodiments. The temperature control module 200 comprises at least one piezoelectric chip 210 (the number is not limited by the present disclosure) and a heat exchange assembly 220. The piezoelectric chip 210 includes two surfaces which are a cool side 211 and a hot side 212, wherein one surface of the piezoelectric chip 210 is in the cultivation room 101, and the other surface is outside of the cultivation room 101. According to the present embodiment, the cool side 211 of the piezoelectric chip 210 is preferably disposed in the cultivation room 101, and the hot side 212 of the piezoelectric chip 210 is disposed outside of the cultivation room 101; however, the present disclosure is not limited thereto, the cool side 211 and the hot side 212 can be exchanged in positions.

The heat exchange assembly 220 includes a heat conduction plate 221. The heat conduction plate 221 is disposed vertically, and one surface of the heat conduction plate 221 is attached on the cool side 211 of the piezoelectric chip 210. A plurality of fins 222 are formed on the other surface of the heat conduction plate 221. Each of the fins 222 extends from the heat conduction plate 221. According to the present embodiment, each of the fins 222 is preferably perpendicular to the heat conduction plate 221, and each of the fins 222 is inclined with respect to the horizontal.

The present embodiment preferably includes two circulation fans 300. The structure of each of the circulation fans 300 is the same as the above-mentioned embodiments. The circulation fans 300 are attached on the heat exchange assembly 200, wherein one of the circulation fans 300 is attached to a horizontally lower end of the fins 222, and the other circulation fan 300 is attached to a horizontally upper end of the fins 222. An airflow direction D1 of the circulation fan 300 is inclined with respect to a normal direction D2 of an overall top surface of each fin 222. A horizontal component D11 of an airflow direction D1 of the circulation fan 300 is in the same direction as a horizontal component D21 of a normal direction D2 of an overall top surface of each fin 222.

When the piezoelectric chip 210 operates to cool the heat exchange assembly 220, the condensed water on the surface of the fin 222 is driven by gravity to flow down along the fin 222, and is blown away from the surface of the fin 222 and blown and scattered into the cultivation room 101 by the two circulation fans 300.

In the plant cultivation device of the present disclosure, the heat exchange assembly 220 includes fins disposed inclinedly, so the condensed water on the fin can be driven by gravity to automatically flow out from the fin 222. Moreover, the circulation fan 300 can blow and scatter the condensed water into the cultivation room 101. Accordingly, there are no water accumulations that need to be removed by manpower.

It is to be understood that the above descriptions are merely preferable embodiments of the present disclosure and are not intended to limit the scope of the present disclosure. Equivalent changes and modifications made in the spirit of the present disclosure are regarded as falling within the scope of the present disclosure.

## Claims

1. A plant cultivation device, comprising:
a case (100), a cultivation room (101) being formed in the case (100);
a temperature control module (200) including a piezoelectric chip (210) and a heat exchange assembly (220), the heat exchange assembly (220) including a heat conduction plate (221), a plurality of fins (222) arranged side by side being formed on a surface of the heat conduction plate (221), each of the fins (222) being inclined with respect to a horizontal, one surface of the piezoelectric chip (210) being in the cultivation room (101) and attached on the other surface of the heat conduction plate (221), the other surface of the piezoelectric chip (210) being outside of the cultivation room (101); and
a circulation fan (300) attached to the heat exchange assembly (220), a horizontal component (D11) of an airflow direction (D1) of the circulation fan (300) being in the same direction as a horizontal component (D21) of a normal direction (D2) of an overall top surface of each fin (222).

2. The plant cultivation device of claim 1, further comprising a heat sink assembly (230), the heat sink assembly (230) including a heat pipe (231) and a heat sink fan (232), one end of the heat pipe (231) being attached to the piezoelectric chip (210), a plurality of heat sink plates (233) being disposed on the other end of the heat pipe (231), the heat sink fan (232) being disposed corresponding to the heat sink plates (233), the heat sink fan (232) driving airflow to flow by the heat sink plates (233) on the heat pipe (231).

3. The plant cultivation device of claim 1, wherein the heat conduction plate (221) is inclined with respect to the horizontal, and each of the fins (222) is perpendicular to the heat conduction plate (221).

4. The plant cultivation device of claim 3, wherein the airflow direction (D1) of the circulation fan (300) is perpendicular to the normal direction (D2) of the overall top surface of each fin (222).

5. The plant cultivation device of claim 3, wherein the airflow direction (D1) of the circulation fan (300) is inclined with respect to the normal direction (D2) of the overall top surface of each fin (222).

6. The plant cultivation device of claim 1, wherein the heat conduction plate (221) is disposed vertically, and each of the fins (222) is inclined with respect to the heat conduction plate (221).

7. The plant cultivation device of claim 6, wherein the airflow direction (D1) of the circulation fan (300) is perpendicular to the normal direction (D2) of the overall top surface of each fin (222).

8. The plant cultivation device of claim 6, wherein the airflow direction (D1) of the circulation fan (300) is inclined with respect to the normal direction (D2) of the overall top surface of each fin (222).

9. The plant cultivation device of claim 1, wherein the circulation fan (300) is attached to a horizontally lower end of the fins (222).

10. The plant cultivation device of claim 1, wherein the circulation fan (300) is attached to a horizontally upper end of the fins (222).
